# EUROPÄISCHE PATENTSCHRIFT

(11) **EP 0 763 625 B1**
(45) Veröffentlichungstag und Bekanntmachung des Hinweises auf die Patenterteilung: **31.10.2001**
(21) Anmeldenummer: 96113173.7
(22) Anmeldetag: 16.08.1996
(51) Int. Cl.: D21F 5/10, D21G 1/02, D21F 3/02

(54) **Vorrichtung für eine Papiermaschine zur Förderung von Flüssigkeit von einem ersten Niveau auf ein zweites, höheres Niveau**
Apparatus in a papermaking machine for transferring a fluid from a first level to a second, higher level
Dispositif dans une machine à papier pour le transport d'un fluide d'un premier niveau à un deuxième niveau plus élévé

(30) Priorität: 18.09.1995 DE 19534571
(43) Veröffentlichungstag der Anmeldung: 19.03.1997
(73) Patentinhaber: Voith Paper Patent GmbH, 89522 Heidenheim (DE)
(72) Erfinder: Schiel, Christian, 89520 Heidenheim (DE); Grundler, Erich, 89564 Nattheim (DE)
(74) Vertreter: Gahlert, Stefan, Dr.-Ing.

(56) Entgegenhaltungen:
- EP-A- 0 105 975
- DE-A- 4 401 582
- US-A- 4 194 299
- US-A- 4 205 457

## Beschreibung

Die Erfindung betrifft eine Vorrichtung für eine Papiermaschine zur Förderung von Flüssigkeit von einem ersten Niveau in einem ersten Raum durch eine Leitung in einen zweiten Raum auf ein zweites, höheres Niveau unter Wirkung einer Differenz der Gasdrücke über der Flüssigkeit im ersten Raum und im zweiten Raum, insbesondere zur Absaugung von Flüssigkeit von einer Walze.

Eine derartige Vorrichtung und ein derartiges Verfahren sind aus der DE 44 01 582 A1 bekannt. Bei der bekannten Vorrichtung erfolgt die Förderung der Flüssigkeit vom ersten Niveau zu einem zweiten, höheren Niveau mit Hilfe einer Gasdruckdifferenz zwischen dem ersten Raum (Einlaufraum) und dem zweiten Raum (Auslaufraum). Um instabile Strömungsverhältnisse und Pulsationen zu vermeiden und den Gasanteil in der Verbindungsleitung vom ersten Niveau zum zweiten Niveau so gering wie möglich zu halten, ist in einer Saugleitung zur Absaugung der Flüssigkeit ein Gasabscheider angeordnet, von dem aus die Flüssigkeit mittels einer weiteren Leitung auf das zweite Niveau weitergefördert wird.

Es hat sich nun gezeigt, daß die bekannte Vorrichtung zwar bei Flüssigkeiten mit relativ niedriger Viskosität zufriedenstellend arbeitet, daß eine einwandfreie Funktionsweise jedoch bei Flüssigkeiten höherer Viskosität oder bei einer stärkeren Schaumbildungsneigung nicht mehr gewährleistet ist. Dann ergeben sich die gleichen Probleme, die allgemein bei der Förderung von Flüssigkeiten von einem Zulauf mit Hilfe einer Gasdruckdifferenz zu einem Auslauf auf einem höheren Niveau auftreten. Zusammen mit der Flüssigkeit wird nämlich im allgemeinen eine gewisse Gasmenge gefördert. Sobald Gas mit der Flüssigkeit durch die Leitung strömt, kommt es zu einem instationären Verhalten der Strömung. Je größer der Gasanteil ist, desto größer ist der Durchsatz an geförderter Flüssigkeit, weil das Gas Flüssigkeit mitreißt. Da jedoch im Einlaufraum nicht unbegrenzt viel Gas zur Verfügung steht, fällt dort der Druck sehr bald ab, so daß es mangels Druckdifferenz nicht mehr zu einer Flüssigkeitsförderung kommt. Dadurch steigt die Flüssigkeitsmenge im Zulaufraum wiederum an, bis wieder eine ausreichend große Druckdifferenz zur Verfügung steht, um Flüssigkeit durch die Leitung abzusaugen. Es kommt somit - trotz des Gasabscheiders in der Absaugleitung - zu unerwünschten Pulsationen und zu instabilen Strömungsverhältnissen. Darüber hinaus ist es nicht mehr sichergestellt, daß auch bei mehreren parallelen Absaugrohren stets alle Saugrohre Flüssigkeit fördern, sofern diese am Saugrohreinlaß angeboten wird.

Eine derartige Problematik tritt an zahlreichen Teilen einer Papiermaschine auf, bspw. bei Trockenzylindern von Papiermaschinen, in denen mittels Siphons Kondensat aus dem Zylinder-Innenraum nach außen abgeführt werden muß oder bei Schuhpressen, bei denen ein Preßmantel auf einem Flüssigkeitsfilm über einen hydrostatisch angepreßten Preßschuh auf einem hydrodynamischen Schmierkeil umläuft. Hierbei muß das überschüssige Schmiermittel aus der Umgebung des Preßschuhs abgesaugt werden und wiederum frisches Schmiermittel an anderen Stellen zugeführt werden, damit der Schmierfilm stabil bleibt.

Ferner sei auf die US-A-4 205 457 hingewiesen, die eine Vorrichtung zur Abfuhr von Kondensat nach dem Siphonprinzip aus dem Innern eines Trockenzylinders nach außen offenbart. Hierbei wird ein Drosselschieber am Siphon in Abhängigkeit vom über dem Kondensat herrschenden Gasdruck derart gesteuert, daß bei erhöhtem Gasdruck oder erhöhtem Druckabfall am Siphon die geöffnete Querschnittsfläche des Drosselschiebers vergrößert wird. Hierbei wird als Regelparameter jedoch lediglich der Gasdruck innerhalb des Zylinders herangezogen, so daß die bekannte Vorrichtung in keinster Weise zur Lösung des oben geschilderten Problems geeignet ist.

Der Erfindung liegt demnach die Aufgabe zugrunde, eine Vorrichtung und ein Verfahren für eine Papiermaschine zur Förderung von Flüssigkeit von einem ersten Niveau in einem ersten Raum durch eine Leitung auf ein zweites, höheres Niveau mit Hilfe einer Gasdruckdifferenz zu schaffen, womit eine stetige Förderung der Flüssigkeit gewährleistet ist, stabile Strömungsverhältnisse herrschen und eine Förderung mit geringem Gasanteil erreicht wird, die weitgehend frei von Pulsationen ist. Dabei soll eine möglichst große Unempfindlichkeit gegenüber Zustandsänderungen der Flüssigkeit erreicht werden.

Diese Aufgabe wird bei einer Vorrichtung gemäß der eingangs genannten Art dadurch gelöst, daß ein Drosselventil zur Regulierung des Fluidstroms durch die Leitung vorgesehen ist, das in Abhängigkeit vom Gasfluß durch die Leitung derart gesteuert ist, daß der Fluidstrom bei Erhöhung des Gasdurchflusses durch die Leitung gedrosselt wird.

Die Aufgabe der Erfindung wird ferner hinsichtlich des Verfahrens dadurch gelöst, daß bei dem Verfahren gemäß der eingangs genannten Art die Strömung des Fluides durch die Leitung gedrosselt wird, wenn die durch die Leitung strömende Gasmenge ansteigt.

Erfindungsgemäß wird auf diese Weise erreicht, daß immer dann, wenn in dem aus dem ersten Raum abgesaugten Fluidstrom der Gasanteil ansteigt, die geförderte Fluidmenge durch die Absaugleitung gedrosselt wird. Da bei steigendem Gasanteil in der Absaugleitung insgesamt die Menge der abgesaugten Flüssigkeit infolge des Mitnahmeeffektes stark ansteigt, wird auf diese Weise durch die Drosselung diesem Effekt entgegengewirkt, so daß sich eine Regelung der abgesaugten Flüssigkeitsmenge auf einen stetigen, stabilen Wert ergibt. Diese Maßnahme funktioniert auch bei Flüssigkeiten hoher Viskosität oder bei stärkerer Schaumbildungsneigung mit hoher Zuverlässigkeit, da für die Regelung der abgeführten Flüssigkeitsmenge unmittelbar die Größe herangezogen wird, die für die ungleichmäßige Abfuhr bei Vorrichtungen herkömmlicher Art verantwortlich war, nämlich die Gasmenge, die aus dem ersten Raum in den zweiten Raum gefördert wird.

Ein besonderer Vorteil der Erfindung liegt darin, daß eine relativ geringe Gasmenge erforderlich ist, um die Förderung der Flüssigkeit auf ein höheres Niveau zu bewirken. Das Massenverhältnis von geförderter Flüssigkeit zu verbrauchtem Gasvolumen kann dabei vorteilhafterweise in einem Bereich zwischen etwa 1:10 bis etwa 10:1 liegen, wobei ein Verhältnis von etwa 1:1 angestrebt wird.

Gemäß einer Weiterbildung der Erfindung ist im ersten Raum oder im zweiten Raum ein Sensor angeordnet, der die Gasdurchflußmenge erfaßt. In Abhängigkeit von der aufgenommenen Gasdurchflußmenge kann dann das Drosselventil in der Leitung vom ersten Raum zum zweiten Raum über ein Stellglied derart gesteuert werden, daß bei Erhöhung der Gasdurchflußmenge der Fluidstrom durch die Leitung gedrosselt wird. Es versteht sich, daß der Sensor auch andere Stellgrößen erfassen kann, um eine Drosselung des Drosselventils bei Erhöhung des Gasanteils in dem abgeführten Fluid zu erreichen. So könnte bspw. statt der Gasdurchflußmenge auch im einfachsten Fall lediglich die Druckdifferenz zwischen dem ersten Raum und dem zweiten Raum erfaßt werden. Auch sind zahlreiche Ausführungen des Stellgliedes denkbar.

Gemäß einer bevorzugten Weiterbildung der Erfindung mündet die Leitung in einem Auftriebskörper im zweiten Raum, der zumindest teilweise in die Flüssigkeit im zweiten Raum eintaucht und über dessen Auftriebskraft das Drosselventil gesteuert wird.

Auf diese Weise wird eine besonders einfache Steuerung des Drosselventils erreicht, da die Auftriebskraft des Auftriebskörpers, die natürlich von der in den Auftriebskörper durch die Leitung geförderten Gasmenge abhängt, unmittelbar zur Verstellung des Drosselventils herangezogen werden kann, so daß auf ein separates Stellglied verzichtet werden kann.

Obwohl eine Konstanthaltung oder annähernde Konstanthaltung der Höhe des Flüssigkeitsspiegels im zweiten Raum, in den der Auftriebskörper zumindest teilweise eintaucht, für das Funktionieren der Regelung des Drosselventils nicht zwingend erforderlich ist, ist gemäß einer Weiterbildung der Erfindung eine Einrichtung zur Konstanthaltung der Höhe des Flüssigkeitsspiegels im zweiten Raum vorgesehen.

Auf diese Weise läßt sich eine gleichmäßigere und von äußeren Schwankungen weitgehend unabhängige Regelung des Drosselventils erreichen. Im einfachsten Fall könnte die Einrichtung zur Konstanthaltung der Höhe des Flüssigkeitsspiegels aus einem Überlaufwehr oder dgl. bestehen. Daneben sind natürlich auch andere Möglichkeiten zur Konstanthaltung denkbar, so bspw. ein Überlauf, der nach dem Prinzip der kommunizierenden Röhren funktioniert, oder aber eine Konstanthaltung mittels Niveausensoren, über die entsprechende Auslaufventile geöffnet bzw. geschlossen werden.

In bevorzugter Weiterbildung der Erfindung ist der Auftriebskörper als nach unten offener, glockenartiger Körper ausgebildet, der eine Entlüftungsdüse an seinem oberen Ende aufweist.

Auf diese Weise ergibt sich eine besonders einfache Ausführung des Auftriebskörpers. Wird überwiegend Flüssigkeit durch die Leitung gefördert, so tritt die Flüssigkeit am unteren Ende des glockenartigen Körpers aus, und der glockenartige Körper kann keine Auftriebskraft entwickeln, da sich in der Glocke keine Gasmenge sammelt. Eine sehr geringe, mitgeförderte Gasmenge tritt durch die Entlüftungsdüse unmittelbar nach oben aus. Der Auftriebskörper wird somit infolge seines Eigengewichtes nach unten sinken, wodurch das Drosselventil geöffnet bleibt. Steigt nunmehr der Gasanteil in dem durch die Leitung geförderten Fluidstrom an, so gelangt eine größere Gasmenge in den glockenartigen Körper, die nicht sofort über die Entlüftungsdüse nach oben entweichen kann. Der glockenartige Körper erfährt somit infolge der eingeschlossenen Gasmenge eine Auftriebskraft nach oben, die zur Drosselung des Drosselventils genutzt werden kann. Fällt nun infolge der Drosselung des Fluidstromes durch die Leitung die Gasmenge in dem geförderten Fluidstrom ab, so wird die sich unter dem glockenartigen Körper angesammelte Gasmenge nach und nach über die Entlüftungsdüse nach oben entleeren, so daß der Auftrieb des Auftriebskörpers nachläßt und das Drosselventil wiederum weiter geöffnet wird.

Gemäß einer weiteren Ausgestaltung der Erfindung umfaßt das Drosselventil eine auf der Leitung verschiebliche Schiebehülse, über die eine Austrittsöffnung der Leitung zumindest teilweise verschließbar ist.

Auf diese Weise ergibt sich eine besonders einfache Ausführung des Drosselventils.

In zusätzlicher Weiterbildung der vorgenannten Ausführung ist die Schiebehülse auf der Leitung vertikal verschiebblich angeordnet und mit dem Auftriebskörper starr verbunden.

Durch diese Kombination ergibt sich eine besonders einfache Regelung des Drosselventils, um die Austrittsöffnung entweder bei geringem oder fehlenden Auftrieb zu öffnen oder um die Austrittsöffnung bei Erhöhung des Auftriebs zu verkleinern, um so den Fluidstrom durch die Leitung zu drosseln.

Gemäß einer alternativen Ausführung der Erfindung ist die Leitung als Rohr ausgebildet, das zumindest eine Eintrittsöffnung auf dem ersten Niveau und eine Austrittsöffnung auf dem zweiten Niveau aufweist, wobei das Drosselventil einen in dem Rohr geführten Kolben umfaßt, durch den die Eintrittsöffnung zumindest teilweise verschließbar ist, und wobei der Kolben am unteren Ende einer Kolbenstange befestigt ist, die an einem oberen Ende des Rohrs verschieblich geführt ist, und die an ihrem oberen Ende mit dem Auftriebskörper starr verbunden ist.

Wiederum wird hierbei die Auftriebskraft des Auftriebskörpers dazu genutzt, um bei erhöhtem Gasdurchfluß den Durchfluß durch das Drosselventil zu verkleinern. Im Gegensatz zur vorbeschriebenen Ausführung erfolgt hierbei die Regelung jedoch am Einlauf der Leitung, indem nämlich die zumindest eine Eintrittsöffnung bei Erhöhung des Auftriebs durch den Kolben verkleinert wird. Hierzu ist der Auftriebskörper mit dem Kolben über die Kolbenstange starr verbunden. Nimmt dagegen der Gasstrom durch die Leitung zu und vergrößert sich somit der Auftrieb des Auftriebskörpers, so wird die zumindest eine Eintrittsöffnung über den Kolben verkleinert, wodurch der Fluidstrom gedrosselt wird.

In weiter vorteilhafter Ausführung der Erfindung ist der Auftriebskörper durch eine Feder derart vorgespannt, daß die Drosselstelle bei geringem Auftrieb weitgehend geöffnet ist.

Durch diese Maßnahme läßt sich eine Verbesserung der Regelungscharakteristik erreichen, da nicht lediglich die Schwerkraft des Auftriebskörpers zur Rückstellung verwendet wird, sondern die Vorspannung der Feder zur Verfügung steht, die darüber hinaus noch auf den jeweiligen Anwendungsfall abgestimmt werden kann, wobei auch progressiv wirkende Federn möglich sind, um nicht lineare Regelungscharakteristiken zu erzeugen.

In zweckmäßiger Weiterbildung der Erfindung sind ein oberer und ein unterer Anschlag zur Begrenzung der oberen und der unteren Endstellung des Auftriebskörpers vorgesehen.

Bei der erstgenannten Ausführung des Auftriebskörpers, bei dem die Regelung an der Austrittsseite der Leitung erfolgt, reichen hierzu Vorsprünge an der Leitung als Anschläge für die Schiebehülse aus.

Wird jedoch die zweite erwähnte Ausführung des Drosselventils verwendet, so kann als unterer Anschlag für den Kolben ein Stopfen dienen, der das untere Ende der Leitung abschließt, sofern der Kolben von einer Druckausgleichsöffnung durchsetzt ist. Als oberer Anschlag kann entweder ein externer Anschlag für den Auftriebskörper dienen oder aber ein Vorsprung an der Kolbenstange, mit dem diese an ihrer Führung am oberen Ende des vertikalen Rohrs anschlägt.

In zusätzlicher Weiterbildung der Erfindung ist die Leitung unter Umgehung der Drosselstelle über ein Überdruckventil, das bei Überschreitung eines vorgegebenen Druckes öffnet, unmittelbar mit dem zweiten Raum verbunden.

Durch diese Maßnahme ergibt sich eine zusätzliche Sicherheit unter extremen Betriebsbedingungen oder bei extrem instationären Vorgängen, da grundsätzlich auch bei geschlossenem Drosselventil ein Durchfluß ermöglicht wird, sofern der vorgegebene Differenzdruck des Überdruckventils überschritten wird.

Bei einer Walze, die mit einer Mehrzahl von Leitungen zur Absaugung von Flüssigkeit aus dem Walzeninneren versehen ist, ist vorzugsweise jede Leitung mit einer erfindungsgemäßen Absaugeinrichtung gekoppelt.

Dadurch wird eine gleichmäßige Absaugung gewährleistet und ein geringer Gasverbrauch sichergestellt.

Es versteht sich, daß die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Darin zeigen:
- Fig. 1: einen Querschnitt einer Schuhpreßwalze in stark vereinfachter Darstellung, bei dem lediglich die erfindungsgemäße Vorrichtung, der Preßschuh und der Preßmantel dargestellt sind;
- Fig. 2: einen Querschnitt einer Schuhpreßwalze mit einer alternativen Ausführung der erfindungsgemäßen Vorrichtung;
- Fig. 3: einen Schnitt durch die Schuhpreßwalze gemäß Fig. 2 längs der Linie III-III;
- Fig. 4: einen Schnitt durch die Schuhpreßwalze gemäß Fig. 2 längs der Linie IV-IV (in verkleinertem Maßstab) ;
- Fig. 5: einen Schnitt durch das Drosselventil gemäß Fig. 2 in vergrößerter Darstellung im Bereich des oberen Endes der Leitung;
- Fig. 6: eine Abwandlung von der Ausführung gemäß Fig. 5 und
- Fig. 7: einen Längsschnitt durch die Leitung im Bereich der Austrittsöffnungen in vergrößerter Darstellung, wobei zusätzlich ein Überdruckventil vorgesehen ist.

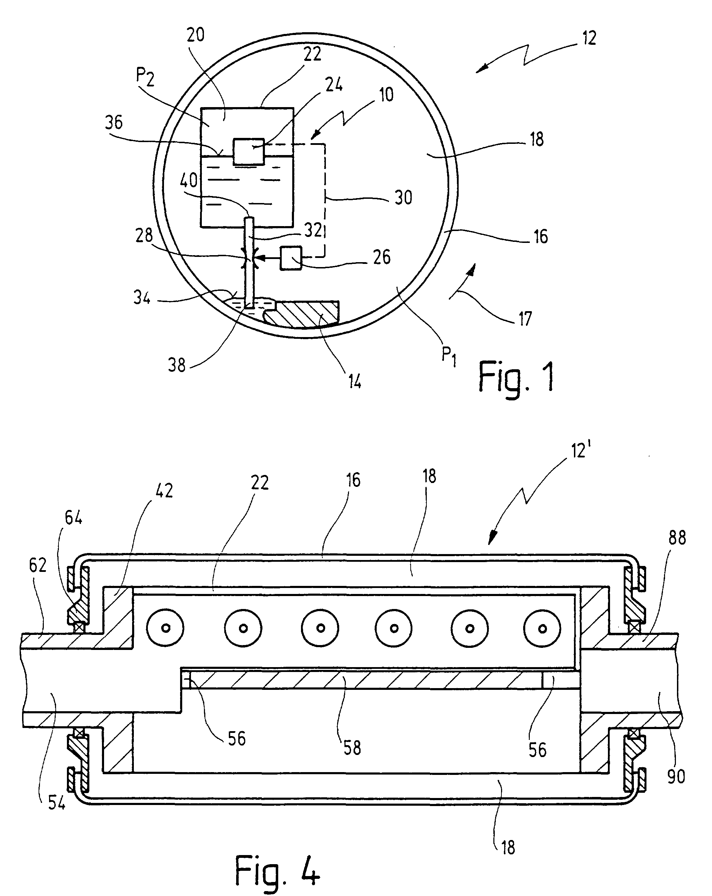

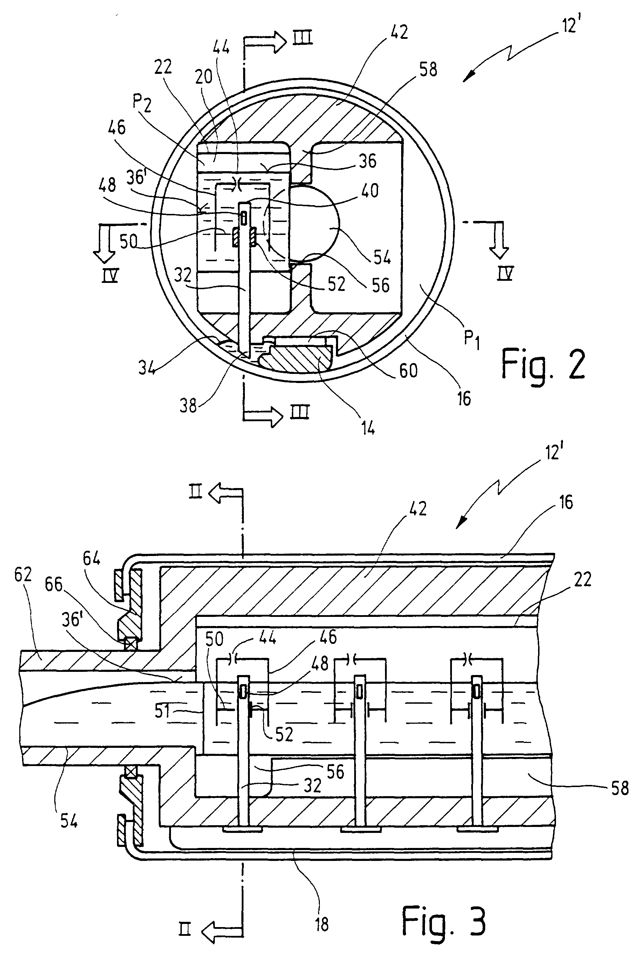

Fig. 1 zeigt eine Schuhpreßwalze für eine Papiermaschine in stark vereinfachter Darstellung, die insgesamt mit der Ziffer 12 bezeichnet ist. Die Schuhpreßwalze 12 umfaßt in bekannter Weise einen an seinen beiden äußeren Zapfen gelagerten Tragkörper (nicht dargestellt) und einen Preßschuh 14, über den ein geschlossener Preßmantel 16 auf einem hydrodynamischen Schmierfilm umläuft. Der Preßschuh 14 wird, wie aus Fig. 2 näher zu ersehen ist, über Anpreßelemente 60 hydrostatisch gegen eine Gegenwalze (nicht dargestellt) angepreßt, um eine durch den Preßspalt zusammen mit mindestens einer Filzbahn geführte wäßrige Papierbahn zu entwässern.

In Fig. 1 wurde der Übersichtlichkeit halber auf die Darstellung des Tragkörpers und weiterer Einzelheiten der Schuhpreßwalze verzichtet, um lediglich das Prinzip der erfindungsgemäßen Vorrichtung 10 erläutern zu können.

Der Preßmantel 16 ist an den Stirnseiten der Schuhpreßwalze 12 mittels Seitenscheiben 64 (vgl. Fig. 3) abgedichtet, so daß sich ein vom Preßmantel 16 umschlossener erster Raum 18 oder Einlaufraum ergibt, innerhalb dessen ein Gasdruck p₁ herrscht.

Um auch bei hohen Preßkräften im Preßspalt einen ausreichenden hydrodynamischen Schmierfilm für den Preßmantel 16 zu gewährleisten, muß im Bereich des Preßschuhs 14 ständig über eine Mehrzahl von Öffnungen Schmiermittel zugeführt werden, während sich das überschüssige Schmiermittel gemäß der Darstellung in Fig. 1 in dem Bereich links vor dem Preßschuh sammelt, sofern sich die Schuhpreßwalze 12 entgegen der Uhrzeigerrichtung, wie durch den Pfeil 17 angedeutet, dreht. Das überschüssige Schmiermittel muß ständig abgesaugt werden und wird über eine Leitung 32 in einen darüberliegenden zweiten Raum 20 gefördert, der von einem Behälter 22 umschlossen ist. Im zweiten Raum 20 herrscht über dem Flüssigkeitsspiegel, der mit der Ziffer 36 angedeutet ist, ein Gasdruck p₂, der niedriger als der Gasdruck p₁ über dem Flüssigkeitsspiegel 34 im ersten Raum 18 ist. Überschüssiges Schmiermittel wird durch die Öffnung am unteren Ende der Leitung 32 angesaugt und infolge der Gasdruckdifferenz p₁ - p₂ in den zweiten Raum 20 gefördert. Innerhalb des zweiten Raumes 20 ist ein Sensor angeordnet, der lediglich schematisch mit der Ziffer 24 angedeutet ist. Der Sensor 24 erfaßt die Gasdurchflußmenge des in den zweiten Raum über die Leitung 32 einströmenden Gases bzw. die Menge des aus dem zweiten Raum 20 nach außen abgeführten Gases. In der Leitung 32 befindet sich ein Drosselventil 28, das mit Hilfe des vom Sensor 24 aufgenommenen Signals über eine Steuerleitung 30 mit Hilfe eines Stellgliedes 26 gesteuert werden kann.

Da es die Absicht ist, stets die gesamte Ölmenge, aber möglichst wenig Gas aus dem ersten Raum 18 in den zweiten Raum 20 zu transportieren, wird das Drosselventil 28 über das Stellglied 26 in Abhängigkeit von dem von dem Sensor 24 aufgenommenen Signal derart gesteuert, daß die Durchflußmenge durch das Drosselventil 28 verkleinert wird, wenn die vom Sensor 24 erfaßte Gasdurchflußmenge ansteigt. Umgekehrt öffnet das Drosselventil 28, wenn die geförderte Gasmenge unter einen eingestellten Wert abfällt. Damit wird erreicht, daß der erste Flüssigkeitsspiegel 34 vor dem Preßschuh 14 auf niedrigstem Niveau gehalten wird und daß auch bei mehreren parallelen Leitungen 32 ein Zusammenbruch des Differenzdruckes p₁ - p₂ nicht erfolgen kann. Es stellt sich somit eine stetige, weitgehend laminare Absaugung überschüssigen Schmiermittels durch die Leitung 32 ein, die frei von Pulsationen und dergleichen ist.

Dabei liegt das Massenverhältnis zwischen der geförderten Flüssigkeit und dem geförderten Gas in einem Bereich von etwa 1:10 bis 10:1, wobei sich meist ein Wert im Bereich von etwa 1:1 einstellt, so daß sehr wenig Gas zur Förderung der Flüssigkeit auf ein höheres Niveau benötigt wird.

Eine gegenüber der Ausführung gemäß Fig. 1 leicht abgewandelte Ausführung einer erfindungsgemäßen Preßwalze ist in den Figuren 2 bis 4 insgesamt mit der Ziffer 12' bezeichnet.

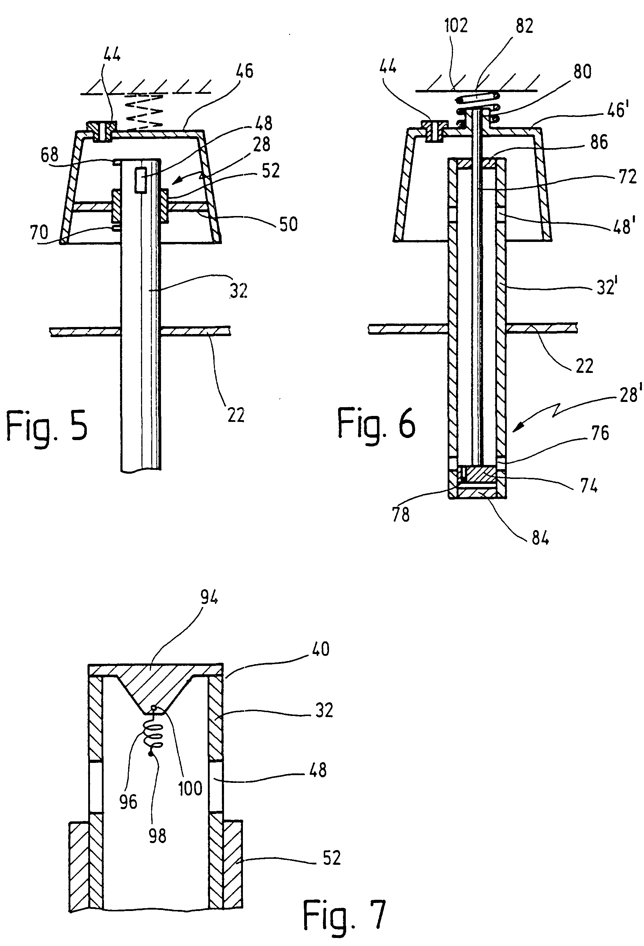

Zusätzlich zu dem Preßmantel 16 und dem Preßschuh 14 ist auch der Tragkörper 42 schematisch dargestellt, dessen Querschnitt die Grundform eines Doppel-T-Trägers hat, der am oberen und unteren Ende zur Führung des umlaufenden Preßmantels 16 kreisabschnittsweise gerundet ist. Der Tragkörper 42 umfaßt einen Mittelsteg 58, der die obere und untere Hälfte verbindet. Der Tragkörper 42 endet an beiden Enden der Preßwalze 12' in Zapfen 62, 88 (vgl. Fig. 4), die in Kugelbüchsen am Maschinengestell gelagert sein können (nicht dargestellt). Die Zapfen 62, 88 des Tragkörpers 42 sind jeweils von koaxialen Öffnungen 54 bzw. 90 durchsetzt. Auf den Zapfen 62 bzw. 88 sind auch die Seitenscheiben 64 mittels Drehlagern 66 drehbar gelagert, über die der von dem Preßmantel 16 umschlossene erste Raum 18 an den Stirnseiten abgedichtet ist.

In einem Hohlraum links neben dem Mittelsteg 58 des Tragkörpers 42 ist der Behälter 22 vorgesehen (Fig. 2), der gegenüber dem rechten, führerseitigen Zapfen 88 der Schuhpreßwalze 12' abgedichtet ist und dichtend an den Trägkörper 42 triebwerksseitig angeschlossen ist. Zur Abführung des Schmiermittels dient eine Ausnehmung 56 am Ende des Mittelsteges 58, durch die Raum 20 mit der Bohrung 54 des Zapfens 62 verbunden ist (Fig. 3). Die Zuführung des Schmiermittels kann durch eine nicht dargestellte Zuführungsleitung durch eine der beiden Zapfenbohrungen 54 oder 90 erfolgen.

Die Leitung 32 weist gemäß Fig. 2 ein unteres Ende 38 mit einer nicht näher dargestellten Einlaufdüse auf, die in die Flüssigkeit vor dem Preßschuh 14 eintaucht. Die Leitung 32 ist als vertikales Rohr ausgebildet und weist im Bereich ihres oberen Endes 40 eine oder mehrere Austrittsöffnungen 48 in Form länglicher Schlitze auf. Auf der Leitung 32 befindet sich eine Schiebehülse 52, die im Bereich der Austrittsöffnungen 48 verschiebbar ist, um so die Austrittsöffnungen 48 öffnen oder schließen zu können.

Die Leitung 32 ist im Bereich ihres oberen Endes 40 von einem Auftriebskörper 46 umgeben, der als nach unten offener glockenförmiger oder topfförmiger Körper ausgebildet ist und über ein Gestänge 50 mit der Schiebehülse 52 starr verbunden ist. Am oberen Ende des Auftriebskörpers 46 ist eine Entlüftungsdüse 44 vorgesehen, die ein langsames Entweichen von Gas aus dem von dem Auftriebskörper 46 umschlossenen Raum nach oben in den zweiten Raum 20 ermöglicht.

Die Wirkungsweise des Drosselventils 28 in Verbindung mit dem Auftriebskörper 46 ist nun die folgende:

Über die Einlaufdüse am unteren Ende der Leitung 32 wird infolge der Gasdruckdifferenz p₁ - p₂, die z. B. durch Gebläse aufrechterhalten werden kann, Flüssigkeit nach oben abgeführt, die durch die Austrittsöffnungen 48 austreten kann, sofern sich die Schiebehülse 52 infolge des Eigengewichtes des Auftriebskörpers 46 in ihrer unteren Endstellung oder deren Nähe befindet, so daß die Austrittsöffnungen 48 freigegeben sind. Steigt nun die durch die Leitung 32 mitgenommene Gasmenge soweit an, daß diese nicht mehr sogleich über die Entlüftungsdüse 44 aus dem Auftriebskörper 46 nach oben entweichen kann, so sammelt sich nach und nach eine Gasblase innerhalb des Auftriebskörpers 46 an, durch die der Auftriebskörper 46 einen Auftrieb erfährt, da dieser zumindest teilweise in die Flüssigkeit im zweiten Raum 20 eintaucht. Übersteigt der Auftrieb das Eigengewicht des Auftriebskörpers 46, so bewegt sich der Auftriebskörper mit der Schiebehülse 52 nach oben und beginnt somit die Austrittsöffnungen 48 zu schließen, so daß der Durchfluß durch die Leitung 32 vermindert wird. Damit sinkt gleichzeitig die durch die Leitung 32 geförderte Gasmenge, so daß sich die Gasblase im Auftriebskörper 46 nach und nach wieder über die Entlüftungsdüse 44 entleeren kann, so daß der Auftrieb nachläßt und die Schiebehülse 52 wieder nach unten bewegt wird.

Somit ergibt sich eine Regelung des durch die Leitung 32 geförderten Fluides in Abhängigkeit von der mitgeförderten Gasmenge.

Die Höhe des Flüssigkeitsspiegels 36 innerhalb des zweiten Raumes 20 wird vorzugsweise konstant gehalten, wozu bspw. ein Überlaufblech 51 gemäß Fig. 3 vorgesehen sein kann. Die Höhe des Flüssigkeitsspiegels 36 im zweiten Raum ist nicht entscheidend, solange sichergestellt ist, daß der Auftriebskörper 46 zumindest teilweise in die Flüssigkeit eintaucht. Die Funktionsfähigkeit ist also sowohl mit einem Flüssigkeitsspiegel 36 sichergestellt, bei dem der Auftriebskörper 46 vollständig in die Flüssigkeit eintaucht als auch bei einem Flüssigkeitsspiegel 36', der unterhalb des Niveaus des Flüssigkeitsspiegels 36 liegt, bei dem jedoch der Auftriebskörper 46 noch teilweise in die Flüssigkeit eintaucht.

In Fig. 5 ist die Drosselstelle 28 mit dem Auftriebskörper 46 vergrößert dargestellt. Zusätzlich sind aus dieser Darstellung ein oberer Anschlag 68 und ein unterer Anschlag 70 an der Leitung 32 zur Begrenzung des Verschiebeweges der Schiebehülse 50 ersichtlich. Gemäß Fig. 5 kann sich der Auftriebskörper 46 auch nach unten hin etwas erweitern, um etwa eine etwas veränderte Regelcharakteristik einzustellen. Im übrigen entspricht die Ausführung gemäß Fig. 5 der zuvor anhand der Figuren 2 bis 4 erläuterten Ausführung

In Fig. 6 ist eine Abwandlung des Drosselventils vergrößert dargestellt und mit der Ziffer 28' bezeichnet. Im übrigen werden für entsprechende Teile entsprechende Bezugsziffern verwendet. Die Verbindungsleitung 32' ist als senkrechtes Rohr ausgebildet, das an seinem unteren Ende durch einen Stopfen 84 und an seinem oberen Ende durch einen Ring 86 verschlossen ist. Oberhalb des Stopfens 84 sind in der Seitenwand des Rohrs 32' mehrere Eintrittsöffnungen 76 vorgesehen, während im Bereich des oberen Endes des Rohres 32' mehrere Austrittsöffnungen 48' vorgesehen sind. Innerhalb des Rohrs 32' ist ein Kolben 74 verschieblich geführt, über den die Eintrittöffnungen 76 verschließbar sind. Der Kolben ist mit einer Kolbenstange 72 starr verbunden, die an ihrem oberen Ende aus dem Rohr 32' nach oben hervorsteht und an dem Ring 86 verschieblich geführt ist. Das obere Ende der Kolbenstange 72 ist mit einem Bund 80 des Auftriebskörpers 46' starr verbunden, der im übrigen vollständig dem zuvor anhand der Figuren 1 bis 5 beschriebenen Auftriebskörper 46 entspricht.

Der Kolben 74 ist von einer Druckausgleichsöffnung 78 in Vertikalrichtung durchsetzt, so daß sich der Kolben 74 nach unten hin bis zum Stopfen 84 bewegen kann, der als Anschlag für die untere Endposition dient. Die obere Endposition des Kolbens 74 ist durch einen Anschlag 102 begrenzt, der am Behälter 22 befestigt ist (nicht dargestellt). Somit ist der Kolben 74 innerhalb der als senkrechtes Rohr ausgebildeten Leitung 32' um einen gewissen Betrag nach oben und unten verschiebbar, der nach oben durch einen Anschlag des Bundes 80 des Auftriebskörpers 46' an dem Anschlag 102 begrenzt ist und nach unten durch einen Anschlag des Kolbens 74 an dem Stopfen 84 am unteren Ende der Leitung 32'. Zwischen dem Bund 80 und dem Anschlag 102 ist zusätzlich eine Schraubenfeder 82 angeordnet, durch die der Auftriebskörper 46' nach unten hin beaufschlagt wird.

Der Kolben 74 wirkt in Verbindung mit den Eintrittsöffnungen 76 als Drosselstelle 28', deren Durchfluß durch die Stellung des Kolbens in bezug auf die Eintrittsöffnungen 76 bestimmt wird. Durch die Druckausgleichsöffnung 78 wird eine Bewegung des Kolbens 74 bis in die untere Endposition zum Anschlag am Stopfen 84 ermöglicht.

Durch die Feder 82 läßt sich eine feinfühligere Abstimmung der Regelcharakteristik des Drosselventils 28' erreichen, da die Rückstellkraft nicht lediglich durch das Eigengewicht des Auftriebskörpers bzw. der Kolbenstange und des Kolbens bedingt ist, sondern durch die Federkraft bestimmt wird. Dabei läßt sich durch die Auswahl der Federcharakteristik der Feder 82 eine feinfühlige Abstimmung und auch eine progressive Regelcharakteristik des Drosselventils 28' erreichen.

Wie in Fig. 5 gestrichelt angedeutet, kann eine derartige Feder natürlich auch bei der Ausführung gemäß Fig. 5 vorteilhaft verwendet werden.

In Fig. 7 ist eine weitere Abwandlung der Ausführung gemäß Fig. 5 dargestellt, bei der das obere Ende der Leitung 32 nicht einfach verschlossen ist, sondern durch ein Überdruckventil 94 verschlossen ist, das bei Überschreitung eines vorgegebenen Differenzdruckes zwischen dem Inneren der Leitung 32 und dem zweiten Raum 20 öffnet. Diese Sicherheitsfunktion ist lediglich schematisch durch eine Feder 96 angedeutet, die über Stifte 98, 100 an der Wandung der Leitung 32 befestigt ist und das Überdruckventil 94 zur Schließung vorspannt.

## Patentansprüche

1. Vorrichtung für eine Papiermaschine zur Förderung von Flüssigkeit von einem ersten Niveau in einem ersten Raum (18) durch eine Leitung (32) in einen zweiten Raum (20) auf ein zweites, höheres Niveau unter Wirkung einer Differenz der Gasdrücke (p₁, p₂) über der Flüssigkeit im ersten Raum (18) und im zweiten Raum (20), insbesondere zur Absaugung von Flüssigkeit von einer Walze (12), **dadurch gekennzeichnet, daß** ein Drosselventil (28; 28') zur Regulierung des Fluidstromes durch die Leitung (32; 32') vorgesehen ist, das in Abhängigkeit vom Gasfluß durch die Leitung (32; 32') derart gesteuert ist, daß der Fluidstrom bei Erhöhung des Gasdurchflusses durch die Leitung (32; 32') gedrosselt wird.

2. Vorrichtung nach Anspruch 1, **dadurch gekennzeichnet, daß** die Leitung (32; 32') unmittelbar in den zweiten Raum (20) mündet, und daß ein Sensor (24) die Gasdurchflußmenge in oder aus dem zweiten Raum (20) erfaßt und mit dem Drosselventil (28; 28') über ein Stellglied (26) gekoppelt ist.

3. Vorrichtung nach Anspruch 1 oder 2, **dadurch gekennzeichnet, daß** die Leitung (32; 32') in einen Auftriebskörper (46; 46') im zweiten Raum (20) mündet, der zumindest teilweise in die Flüssigkeit im zweiten Raum (20) eintaucht und über dessen Auftriebskraft das Drosselventil (28; 28') gesteuert wird.

4. Vorrichtung nach Anspruch 3, **dadurch gekennzeichnet, daß** eine Einrichtung (51) zur Konstanthaltung der Höhe des Flüssigkeitsspiegels (36; 36') im zweiten Raum (20) vorgesehen ist.

5. Vorrichtung nach Anspruch 3 oder 4, **dadurch gekennzeichnet, daß** der Auftriebskörper (46; 46') als nach unten offener, glockenartiger Körper ausgebildet ist, der eine Entlüftungsdüse (44) an seinem oberen Ende aufweist.

6. Vorrichtung nach einem oder mehreren der vorhergehenden Ansprüche, **dadurch gekennzeichnet, daß** das Drosselventil (28) eine auf der Leitung (32) verschiebliche Schiebehülse (52) umfaßt, über die eine Austrittsöffnung (48) der Leitung (32) zumindest teilweise verschließbar ist.

7. Vorrichtung nach Anspruch 6, **dadurch gekennzeichnet, daß** die Schiebehülse (52) auf der Leitung (32) vertikal verschieblich angeordnet ist und mit dem Auftriebskörper (46) starr verbunden ist.

8. Vorrichtung nach Anspruch 3, 4 oder 5, **dadurch gekennzeichnet, daß** die Leitung (32') als Rohr ausgebildet ist, das zumindest eine Eintrittsöffnung (76) auf dem ersten Niveau und eine Austrittsöffnung (48') auf dem zweiten Niveau aufweist, daß die Drosselstelle (28') einen in dem Rohr geführten Kolben (74) umfaßt, durch den die Eintrittsöffnung (76) zumindest teilweise verschließbar ist, und daß der Kolben (74) am unteren Ende einer Kolbenstange (72) befestigt ist, die an einem oberen Ende des Rohrs verschieblich geführt ist, und die an ihrem oberen Ende mit dem Auftriebskörper (46') starr verbunden ist.

9. Vorrichtung nach einem oder mehreren der Ansprüche 3 bis 8, **dadurch gekennzeichnet, daß** der Auftriebskörper (46, 46') durch eine Feder (82) derart vorgespannt ist, daß die Drosselstelle (28, 28') bei geringem Auftrieb weitgehend geöffnet ist.

10. Vorrichtung nach einem oder mehreren der Ansprüche 3 bis 9, **dadurch gekennzeichnet, daß** ein oberer und ein unterer Anschlag (68, 70; 86, 84) zur Begrenzung der oberen und der unteren Endstellung des Auftriebskörpers (46; 46') vorgesehen ist.

11. Vorrichtung nach einem oder mehreren der vorhergehenden Ansprüche, **dadurch gekennzeichnet, daß** die Leitung (32) unter Umgehung der Drosselstelle (28') über ein Überdruckventil (94), das bei Überschreitung eines vorgegebenen Druckes öffnet, unmittelbar mit dem zweiten Raum (20) verbunden ist.

12. Walze für eine Papiermaschine, umfassend eine Mehrzahl von Leitungen (32; 32') zur Absaugung von Flüssigkeit aus der Walze, **dadurch gekennzeichnet, daß** jede Leitung (32; 32') eine Vorrichtung gemäß einem der Ansprüche 1 bis 10 umfaßt.

13. Verfahren zur Förderung einer Flüssigkeit von einem ersten Niveau durch eine Leitung (32; 32') auf ein zweites, höheres Niveau unter Wirkung einer Differenz der Gasdrücke (p₁, p₂) über der Flüssigkeit auf dem ersten Niveau und auf dem zweiten Niveau, **dadurch gekennzeichnet, daß** die Strömung des Fluids durch die Leitung (32; 32') gedrosselt wird, wenn die durch die Leitung (32; 32') strömende Gasmenge ansteigt.

14. Verfahren nach Anspruch 13, bei dem das Verhältnis zwischen der Masse der geförderten Flüssigkeit und der zur Förderung verbrauchten Gasmenge im Bereich von etwa 1:10 bis etwa 10:1 liegt, vorzugsweise im Bereich von etwa 1:1.

## Claims

1. Apparatus for a paper machine for conveying liquid from a first level in a first chamber (18) through a line (32) into a second chamber (20) at a second, higher level under the action of a difference between the gas pressures (p₁, p₂) above the liquid in the first chamber (18) and in the second chamber (20), in particular for extracting liquid from a roll (12), **characterized in that** a throttling valve (28; 28') is provided to regulate the fluid flow through the line (32; 32') and is controlled as a function of the gas flow through the line (32; 32') in such a way that the fluid flow through the line (32; 32') is throttled if the gas flow is increased.

2. Apparatus according to Claim 1, **characterized in that** the line (32; 32') opens directly into the second chamber (20), and **in that** a sensor (24) registers the gas flow into or out of the second chamber (20) and is coupled to the throttling valve (28; 28') via an actuator (26).

3. Apparatus according to Claim 1 or 2, **characterized in that** the line (32; 32') opens into a buoyancy element (46; 46') in the second chamber (20), which dips at least partly into the liquid in the second chamber (20) and whose buoyancy force is used to control the throttling valve (28; 28').

4. Apparatus according to Claim 3, **characterized in that** a device (51) is provided to keep the height of the liquid level (36; 36') in the second chamber (20) constant.

5. Apparatus according to Claim 3 or 4, **characterized in that** the buoyancy element (46; 46') is constructed as a bell-like element which is open at the bottom and has a venting nozzle (44) at its upper end.

6. Apparatus according to one or more of the preceding claims, **characterized in that** the throttling valve (28) comprises a sliding sleeve (52) which can be displaced on the line (32) and via which an outlet opening (48) belonging to the line (32) can be closed, at least partially.

7. Apparatus according to Claim 6, **characterized in that** the sliding sleeve (52) is arranged on the line (32) such that it can be displaced vertically and is rigidly connected to the buoyancy element (46).

8. Apparatus according to Claim 3, 4 or 5, **characterized in that** the line (32') is designed as a pipe which has at least one inlet opening (76) at the first level and an outlet opening (48') at the second level, **in that** the throttling point (28') comprises a piston (74) which is guided in the pipe and by means of which the inlet opening (76) can be closed, at least partially, and **in that** the piston (74) is fixed to the lower end of a piston rod (72) which is displaceably guided at an upper end of the pipe and which, at its upper end, is rigidly connected to the buoyancy element (46').

9. Apparatus according to one or more of Claims 3 to 8, **characterized in that** the buoyancy element (46, 46') is prestressed by a spring (82) in such a way that the throttling point (28, 28') is largely open when there is low buoyancy.

10. Apparatus according to one or more of Claims 3 to 9, **characterized in that** an upper and a lower stop (68, 70; 86, 84) are provided in order to limit the upper and lower end positions of the buoyancy element (46; 46').

11. Apparatus according to one or more of the preceding claims, **characterized in that** the line (32) is connected directly to the second chamber (20) while bypassing the throttling point (28') via an overpressure valve (94), which opens when a predefined pressure is exceeded.

12. Roll for a paper machine, comprising a plurality of lines (32; 32') for extracting liquid from the roll, **characterized in that** each line (32; 32') comprises an apparatus according to one of Claims 1 to 10.

13. Method of conveying a liquid from a first level through a line (32; 32') to a second, higher level under the action of a difference between the gas pressures (p₁, p₂) above the liquid at the first level and at the second level, **characterized in that** the flow of the fluid through the line (32; 32') is throttled when the quantity of gas flowing through the line (32; 32') rises.

14. Method according to Claim 13, in which the ratio between the mass of liquid conveyed and the quantity of gas used for the conveyance is in the range from about 1:10 to about 10:1, preferably in the range of about 1:1.

## Revendications

1. Dispositif pour une machine à papier pour refouler du liquide d'un premier niveau dans une première chambre (18) par le biais d'une conduite (32) dans une deuxième chambre (20) à un deuxième niveau plus élevé sous l'action d'une différence de pressions de gaz (p₁, p₂) du liquide dans la première chambre (18) et dans la deuxième chambre (20), en particulier pour aspirer du liquide provenant d'un cylindre (12), **caractérisé en ce qu'**il est prévu une soupape à étranglement (28 ; 28') pour la régulation du courant de fluide à travers la conduite (32 ; 32'), laquelle soupape est commandée en fonction du flux de gaz à travers la conduite (32 ; 32') de telle sorte que le courant de fluide soit étranglé en cas d'augmentation du débit de gaz à travers la conduite (32 ; 32').

2. Dispositif selon la revendication 1, **caractérisé en ce que** la conduite (32 ; 32') débouche directement dans la deuxième chambre (20) et **en ce qu'**un détecteur (24) détecte la quantité de débit gazeux dans ou sortant de la deuxième chambre (20) et est accouplé à la soupape à étranglement (28 ; 28') par l'intermédiaire d'un organe de réglage (26).

3. Dispositif selon la revendication 1 ou 2, **caractérisé en ce que** la conduite (32 ; 32') débouche dans un flotteur (46 ; 46') dans la deuxième chambre (20), lequel plonge au moins partiellement dans le liquide dans la deuxième chambre (20) et commande par sa force de sustentation la soupape à étranglement (28 ; 28').

4. Dispositif selon la revendication 3, **caractérisé en ce qu'**il est prévu un dispositif (51) pour maintenir constante la hauteur du niveau de liquide (36 ; 36') dans la deuxième chambre (20).

5. Dispositif selon la revendication 3 ou 4, **caractérisé en ce que** le flotteur (46 ; 46') est formé en tant que corps en forme de cloche ouvert vers le bas, qui présente un capteur à fuite (44) à son extrémité supérieure.

6. Dispositif selon l'une ou plusieurs des revendications précédentes, **caractérisé en ce que** la soupape à étranglement (28) comprend un manchon coulissant (52) déplaçable sur la conduite (32), par l'intermédiaire duquel une ouverture de sortie (48) de la conduite (32) peut être fermée au moins partiellement.

7. Dispositif selon la revendication 6, **caractérisé en ce que** le manchon coulissant (52) est disposé de manière déplaçable verticalement sur la conduite (32) et est connecté rigidement au flotteur (46).

8. Dispositif selon la revendication 3, 4 ou 5, **caractérisé en ce que** la conduite (32') est formée en tant que tube qui présente au moins une ouverture d'entrée (76) au premier niveau et une ouverture de sortie (48') au deuxième niveau, **en ce que** le point d'étranglement (28') comprend un piston (74) guidé dans le tube, par lequel l'ouverture d'entrée (76) peut être au moins partiellement fermée, et **en ce que** le piston (74) est fixé à l'extrémité inférieure d'une tige de piston (72) qui est guidée de manière déplaçable à une extrémité supérieure du tube, et qui est connectée rigidement à son extrémité supérieure au flotteur (46').

9. Dispositif selon l'une ou plusieurs des revendications 3 à 8, **caractérisé en ce que** le flotteur (46, 46') est précontraint par un ressort (82) de telle sorte que le point d'étranglement (28, 28') soit essentiellement ouvert pour une faible sustentation.

10. Dispositif selon l'une ou plusieurs des revendications 3 à 9, **caractérisé en ce qu'**une butée supérieure et une butée inférieure (68, 70 ; 86, 84) sont prévues pour limiter les positions extrêmes supérieure et inférieure du flotteur (46 ; 46').

11. Dispositif selon l'une ou plusieurs des revendications précédentes, **caractérisé en ce que** la conduite (32) est connectée par contournement du point d'étranglement (28') par le biais d'une soupape de surpression (94), qui s'ouvre en cas de dépassement d'une pression prédéterminée, directement à la deuxième chambre (20).

12. Cylindre pour une machine à papier, comprenant une pluralité de conduites (32 ; 32') pour l'absorption de liquide depuis le cylindre, **caractérisé en ce que** chaque conduite (32 ; 32') comprend un dispositif selon l'une quelconque des revendications 1 à 10.

13. Procédé de refoulement d'un liquide depuis un premier niveau par une conduite (32 ; 32') à un deuxième niveau plus élevé sous l'effet d'une différence de pressions de gaz (p₁, p₂) du liquide au premier niveau et au deuxième niveau, **caractérisé en ce que** l'écoulement du fluide à travers la conduite (32 ; 32') est étranglé lorsque la quantité de gaz s'écoulant à travers la conduite (32 ; 32') augmente.

14. Procédé selon la revendication 13, dans lequel le rapport entre la masse du liquide refoulé et la quantité de gaz utilisée pour le refoulement est compris dans une gamme d'environ 1:10 à environ 10:1, de préférence dans la région d'environ 1:1.
